# EUROPEAN PATENT SPECIFICATION

(11) **EP 0 525 979 B1**
(45) Date of publication and mention of the grant of the patent: **21.05.1997**
(21) Application number: 92305899.4
(22) Date of filing: 26.06.1992
(51) Int. Cl.: E05B 49/00, B60R 25/00

(54) **Vehicle immobilizer with override means**
Kraftfahrzeugfixiervorrichtung mit Vorrangssteuerung
Immobilisateur de véhicule avec commande prioritaire

(30) Priority: 31.07.1991 ZA 916006
(43) Date of publication of application: 03.02.1993
(73) Proprietor: CONTROL LOGIC (PROPRIETARY) LIMITED, Durban Natal Province (ZA)
(72) Inventor: Pucci, Franco Giovanni, Durban, Natal Province (ZA); Moulder, Kevin Edward, Durban, Natal Province (ZA); Wagner, Alan Keith, Durban, Natal Province (ZA)
(74) Representative: Barlow, Roy James

(56) References cited:
- EP-A- 0 265 306
- FR-A- 2 569 641

## Description

### INTRODUCTION

**THIS INVENTION** relates to a vehicle immobilizer system with a means of overriding it.

### BACKGROUND TO THE INVENTION

Many vehicles are fitted nowadays with immobilizer systems, with or without audible or visual alarms. These systems are most frequently operated by a remote controlled transmitter which transmits a code, when activated by the user, to a receiver in the vehicle. The receiver interprets the code and authorises it if correct, and enables or disables the immobilizing mechanism fitted to the vehicle. Some systems operate automatically with the immobilizer being enabled within a certain time after the ignition has been switched off, or the key completely removed.

The transmission medium from the transmitter is often radio frequency or infra red light.

Difficulties can arise when the transmitter is faulty. The transmitter battery may be flat, or there may be a functional problem with the transmission section. Similarly the transmission receiving section of the immobilizer may have a problem. A user is, under these circumstances, unable to disarm the immobilizer and use the vehicle.

The most frequent solution for this difficulty is the installation of a physical override switch. Such a switch is generally located in a hidden position, but nonetheless necessitates the provision of specific wiring in an accessible position to the passenger compartment, which, when connected, will disable the immobilizer. This reduces the security of the system.

Systems in which remote transmitters are used to operate locking mechanisms are disclosed in the following patent applications: GB-A-1.595.796, GB-A-2.046.827 and EP-A-0.430.732. The remote transmitters disclosed in all of these patent applications are battery-powered and therefore suffer from the disadvantages outlined above. US-A-4.453.161 discloses an immobilizing system in which a remote transmitter is energised and activated by an electromagnetic field in the vicinity of a receiver. Although this receiver is not battery powered, the immobilising system will be inoperable in the event of failure to the remote transmitter.

An alternate type of immobilizer system, in which a card or a key is inserted into an aperture to activate or to inactivate an immobilizer, is disclosed in the following Patent Applications: GB-A-2219827, GB-A-1474667, GB-A-2024914 and US-A-4250533.

EP-A-0265306 discloses an immobilising system for a vehicle in which a lock on a door of the vehicle is unlocked by activation of a portable infrared transmitter. The infrared transmitter also contains a stored authorisation code. The stored code is read when the transmitter is plugged into a socket in the vehicle. If the authorisation code is valid, the driver of the vehicle is required to identify himself, either by means of voice recognition or by entering a further authorisation code, whereupon the vehicle is enabled for travel.

FR-A-2569641 (which corresponds to US-A-4837567) relates to a security system for a vehicle including a key with remote transmitter for emitting a coded signal to unlock a door of the vehicle, the key being insertable into the steering assembly to enable free rotation of the steering column of the vehicle and ignition activation of the vehicle system.

### OBJECT OF THE INVENTION

It is an object of this invention to provide a vehicle immobilizing system which includes an override facility.

### SUMMARY OF THE INVENTION

In accordance with this invention there is provided an immobilizing system, an immobilizing system for a vehicle, which includes an override facility, said system comprising :
a portable transmitter having a battery circuit and being capable on activation when the transmitter is remote from a vehicle, of transmitting a code to said vehicle; and
an immobilizer connectable to the vehicle for selectively immobilizing it, and enabling it for travel on receipt of an authorised code from the transmitter,
the transmitter being connectable to an interface of the immobilizer to cause the transmitter to be activated to transmit the code to the immobilizer, the interface being arranged to provide power for the transmitter along an interface power path in the transmitter which bypasses the battery circuit.

Further, there is provided for the transmitter may be arranged to allow a connection to the interface to cause automatic activation of the transmitter code.

The transmitter may be arranged for transmission of the code directly along the interface connection wires to the immobilizer system, bypassing the transmitter transmission facility. Preferably the interface is also arranged to receive the code from the transmitter along a signal path which bypasses the receiver section of the immobilizer which normally receives transmission from the transmitter.

Still further, the transmitter unit preferably has contacts at one end for plug like insertion into a socket of the interface.

These contacts may be located in slot like rebates which are spaced apart along, and extend from, one edge of the transmitter housing, part way into the body. The interface socket in that case may have protruding resilient contacts for sliding connection with the transmitter contacts when the transmitter is plugged into the socket in use.

### BRIEF DESCRIPTION OF THE DRAWINGS

A preferred embodiment of the invention is described below by way of example only, and with reference to the accompanying drawings, in which :
- Figure 1: is an isometric front view of an interface socket;
- Figure 2: is an isometric view of the rear of a transmitter housing;
- Figure 3: is a partly sectioned end view of the socket and housing of Figure 1 and 2 with the transmitter plugged into the socket; and,
- Figure 4: is a diagrammatic view of the operation of the embodiment of the invention illustrated in Figures 1 to 3.

### DETAILED DESCRIPTION OF THE DRAWINGS

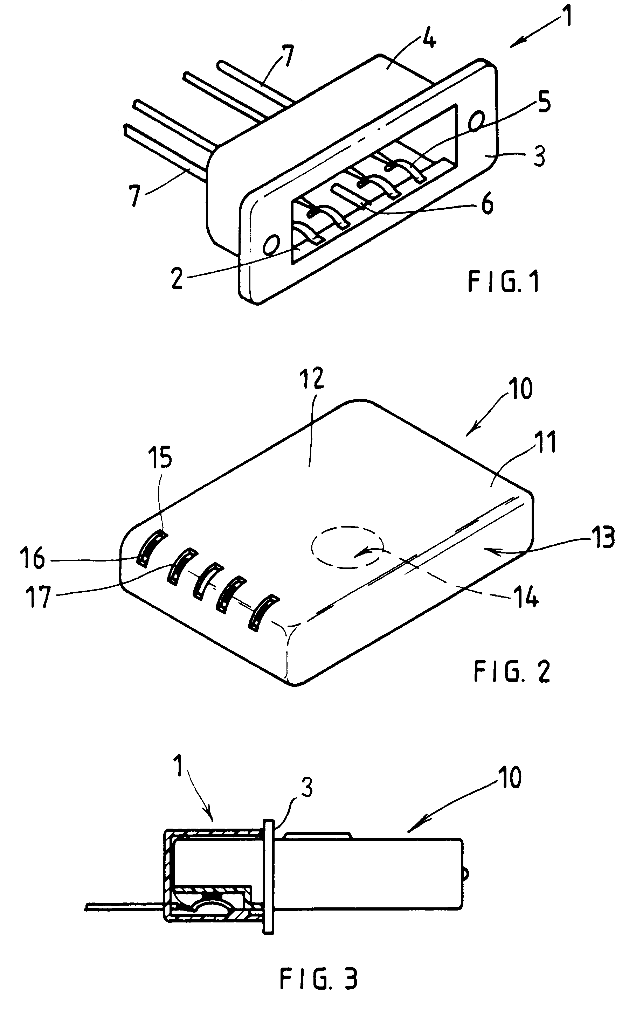

Referring to Figure 1 a socket (1) has a rectangular opening (2) leading into a generally box-shaped socket compartment (4), and having a surrounding face plate (3).

Along a bottom major interior surface of the compartment (4), are electrical contacts (5). The contacts (5) are elongate and lie in the direction of insertion into and removal from the socket. They are spring-loaded, and biased towards the interior of the housing. There are four such contacts, with two each being spaced apart around a central ridge (6) running in the same direction as the contacts. Only three of the contacts are required in this embodiment.

Each of the contacts has a wire (7) connected to it leading rearwardly through the back of the box housing (4).

Referring to Figure 2, a transmitter (10) is contained in a housing (11) of a flat rectangular box-like shape, and has a major rear surface (12) and an opposing major front surface (13). A button (14) is located on the front surface for activation of the transmitter. Along one short edge of the rear surface are located slots (15). The slots are spaced apart across the width and lie in the length of the transmitter housing. The slots are in the form of rebates which commence at the edge (16) and extend part way into the body a short distance from the end of the transmitter housing. There are five such slots, with the middle one being empty and the two on each side thereof each having an electrical contact (17) projecting into the rebate space.

Referring now to Figure 3, the transmitter (10) is shown plugged into the socket (1) of Figures 1 and 2. This is done with the slots (16) lowermost to coincide with the electrical contacts (5) on the operative bottom surface (2) of the compartment. When the transmitter is plugged into the socket, the electrical contacts (17) come into contact with the spring loaded contacts (5), depressing them towards the bottom two of the socket, and making contact with them as the contact (17) slides thereover. The central ridge (6) serves to locate in the central slot in the transmitter housing. Thus the wires (7) are in electrical contact with the contact (17).

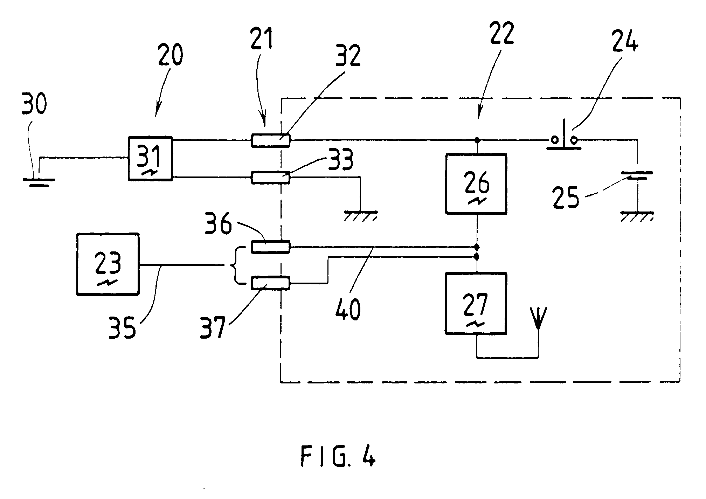

Referring now to Figure 4, a portion (20) of an immobilizing system located in a vehicle is shown, having contacts (21), which are the four contacts within the sockets as described with reference to Figures 1 and 3. A transmitter (22) is provided, having a housing as described with reference to Figures 2 and 3.

Within the transmitter (22) is located the necessary circuitry to transmit a coded signal to the vehicle, from a remote position, to arm and disarm a vehicle immobilizer (23).

The transmitter (22) has a button (24) to activate the transmission of the code, and is powered by a battery (25) which the button connects to a code output device (26) which feeds a code to a modulator and transmission section (27) for transmission of the code.

The portion (20) of the system is connected to the vehicle battery (30) which feeds to a power supply (31) providing power to contacts (32) and (33) of the socket (21). The power supply provides suitable power for powering up a transmitter (22).

A serial input port (35) is provided to the immobilizer portion (23), for direct insertion of the correct code for disarming the immobilizer and enabling the vehicle for travel. The port is connected to contacts (36) and (37) of the socket (21). The power supply line to the code output device (26) is also connected to the equivalent connection (32) of the transmitter and socket connection, with the earth power being connected to connector (33). The output of the coding device is taken along either line (40) to the connection (36) and (37), to provide a serial output port of the code from the coder (26) prior to its modulation in the transmission section (27) of the transmitter. In this embodiment only one of the lines (40) is required.

In use, if a user finds that the transmitter is not operating, and he cannot disarm the immobilizer to drive his vehicle, he can plug the transmitter into the socket within the vehicle. The transmitter malfunction may be as a result of a flat battery, or may be as a result of a fault in the transmission section (27) of the transmitter.

On plugging the transmitter into the socket, the power supply (31) provides power to the transmitter circuitry, but bypasses the battery power circuit provided through connection of the button (24). This ensures also that any part of the battery circuitry along this section which is faulty, will not affect the provision of power from the vehicle battery. With the power thus supplied, the coder (26) is automatically activated without the necessity to activate it through the button (24), and it will produce its code transmission. The code transmission will be taken along lines (40) to the immobilizer (23) through the port (35). This will serve to disarm the immobilizer and enable the vehicle to travel. It will be appreciated that any fault in the transmission section (27) will not affect this process since the code is taken prior to modulation directly to the immobilizer through either of the contacts (35) or (36).

It is considered that the invention provides a vehicle alarm system which can be overridden without loss of the inherent security of the system.

Variations may be made to the above embodiments without departing from the scope of the invention. For example, whilst it is preferred that the -connection system bypasses the switching and transmission sections in the transmitter, this is not necessarily so. The transmitter may be powered up by a supply of power directly parallel to the battery, and it may be made necessary to activate the button on the transmitter to cause the, say, radio frequency transmission to be emitted and picked up through the normal receiving means in the immobilizer system in the vehicle.

## Claims

1. An immobilizing system for a vehicle, which includes an override facility, said system comprising :
a portable transmitter (10) having a battery circuit (24, 25) and being capable on activation when the transmitter is remote from a vehicle, of transmitting a code to said vehicle; and
an immobilizer (23) connectable to the vehicle for selectively immobilizing it, and enabling it for travel on receipt of an authorised code from the transmitter,
characterized in that
the transmitter is connectable to an interface of the immobilizer to cause the transmitter to be activated to transmit the code to the immobilizer, the interface being arranged to provide power for the transmitter along an interface power path (32, 33) in the transmitter which bypasses the battery circuit.

2. An immobilizing system for a vehicle as claimed in any one of the preceding claims characterised in that the transmitter (10) is automatically activated to generate the code when the transmitter is connected to the interface.

3. An immobilizing system for a vehicle as claimed in either of the preceding claims characterised in that the transmitter (10) is arranged to transmit the code to the immobilizer (23) directly along interface connection wires (36,37) bypassing the transmitter transmission facility (27).

4. An immobilizing system for a vehicle as claimed in claim 3 characterised in that the interface (1) is arranged to receive the code from the transmitter (10) along a signal path which bypasses a receiver section of the immobilizer (23) which normally receives transmissions from the transmitter transmission facility (27).

5. An immobilizing system for a vehicle as claimed in any one of the preceding claims characterised in that the transmitter unit (10) has contacts (17) at one end for plug-like insertion into a socket (1) of the interface.

6. An immobilizing system for a vehicle as claimed in claim 5 characterised in that the contacts (17) are located in slot-like rebates (15) which are spaced apart along, and extend from, one edge (16) of a transmitter housing (11), part way into the body of the housing.

7. An immobilizing system for a vehicle as claimed in claim 6 characterised in that the interface socket (1) has protruding resilient contacts (5) for sliding connection with the transmitter contacts (17) when the transmitter is plugged into the socket in use.

## Patentansprüche

1. Fixiersystem für ein Fahrzeug, welches eine Vorrangsteuerung einschließt, wobei das System umfaßt:
Einen tragbaren Sender (10) mit einem Batterieschaltkreis (24, 25), der in der Lage ist, bei Betätigung des Senders entfernt von einem Fahrzeug einen Code an das Fahrzeug zu senden; und
eine Fixiervorrichtung (23), die mit dem Fahrzeug zur selektiven Fixierung verbunden werden kann und um es bei Empfang eines zugelassenen X des Senders für das Fahren freizugeben,
dadurch gekennzeichnet, daß
der Sender an eine Schnittstelle der Fixiervorrichtung angeschlossen werden kann, um den Sender zu einer Betätigung zu veranlassen, um den Code an die Fixiervorrichtung zu senden, wobei die Schnittstelle so angeordnet ist, daß sie den Sender über eine Schnittstellenenergieleitung (32, 33) in den Sender versorgt, welche den Batterieschaltkreis umgeht.

2. Fixiersystem für einen Fahrzeug nach einem der vorhergehenden Ansprüche, **dadurch gekennzeichnet, daß** der Sender (10) automatisch aktiviert wird, um den Code zu erzeugen, wenn der Sender mit der Schnittstelle verbunden ist.

3. Fixiersystem für ein Fahrzeug nach einem der vorhergehenden Ansprüche, **dadurch gekennzeichnet, daß** der Sender (10) angeordnet ist, um den Code an die Fixiervorrichtung (23) direkt über die Schnittstellenverbindungskabel (36, 37) an die Fixiervorrichtung (23) unter Umgehung der Sendeeinrichtung (27) des Senders zu senden.

4. Fixiersystem für eine Fahrzeug wie in Anspruch 3 beansprucht, **dadurch gekennzeichnet, daß** die Schnittstelle (1) so angeordnet ist, um den Code von dem Sender (10) über eine Signalleitung zu empfangen, der den Empfangsbereich der Fixiervorrichtung (23) umgeht, der Sendungen von der Sendeeinrichtung (27) des Senders normalerweise empfängt.

5. Fixiersystem für ein Fahrzeug wie in einem der vorhergehenden Ansprüche beansprucht, erwischt gekennzeichnet, daß die Sendeeinheit (10) Kontakte (17) an einem Ende hat, für eine steckerähnliche Einführung in eine Buchse (1) der Schnittstelle.

6. Fixiersystem für ein Fahrzeug wie in Anspruch 5 beansprucht, **dadurch gekennzeichnet, daß** die Kontakte (17) in schlitzartigen Ausnehmungen (15) entlang einer Kante (16) eines Sendergehäuses (11) angeordnet sind, und sich von dieser teilweise in den Körper des Gehäuses erstrecken.

7. Fixiersystem für ein Fahrzeug, wie in Anspruch 6 beansprucht, **dadurch gekennzeichnet, daß** die Schnittstellenbuchse (1) vorstehendene, elastische Kontakte (5) hat, für eine Schiebeverbindung mit den Senderkontakten (17), wenn der Sender während der Benutzung in die Buchse gesteckt ist.

## Revendications

1. Système d'immobilisation pour véhicule, comportant un dispositif de commande prioritaire, ledit système comprenant :
un transmetteur portatif (10) comportant un circuit à piles (24, 25) et pouvant, lorsqu'il est mis en fonction tandis que le transmetteur est éloigné du véhicule, transmettre un code audit véhicule ; et
un immobilisateur (23), pouvant être connecté au véhicule pour l'immobiliser de façon sélective, et en permettre le déplacement à réception d'un code autorisé, venant du transmetteur, caractérisé en ce que
le transmetteur peut être relié à une interface de l'immobilisateur pour entraîner l'activation du transmetteur afin qu'il transmette le code à l'immobilisateur, l'interface étant conçue de façon à fournir de l'énergie pour le transmetteur, suivant un chemin de courant d'interface (32, 33) dans le transmetteur, qui contourne le circuit des piles.

2. Système d'immobilisation pour véhicule selon la revendication précédente, caractérisé en ce que le transmetteur (10) est automatiquement activé pour fournir le code lorsque le transmetteur est relié à l'interface.

3. Système d'immobilisation pour véhicule selon l'une ou l'autre des revendications précédentes, caractérisé en ce que le transmetteur (10) est conçu pour transmettre le code à l'immobilisateur (23), directement suivant les fils de connexion d'interface (36, 37) contournant le dispositif de transmission (27) du transmetteur.

4. Système d'immobilisation pour véhicule selon la revendication 3, caractérisé en ce que l'interface (1) est conçue pour recevoir le code venant du transmetteur (10), suivant un chemin de signaux qui contourne la partie réception de l'immobilisateur (23) qui reçoit normalement les transmissions provenant du dispositif de transmission (27) du transmetteur.

5. Système d'immobilisation pour véhicule selon l'une quelconque des revendications précédentes, caractérisé en ce que l'unité transmettrice (10) comporte des contacts (17) à une extrémité pour permettre son introduction à la manière d'une fiche dans une prise (1) de l'interface.

6. Système d'immobilisation pour véhicule selon la revendication 5, caractérisé en ce que les contacts (17) sont situés dans des retraits (15) en forme de fente, qui sont espacés le long de, et s'étendent depuis, un bord (16) du boîtier (11) du transmetteur, en partie vers l'intérieur du corps du boîtier.

7. Système d'immobilisation pour véhicule selon la revendication 6, caractérisé en ce que la prise (1) de l'interface présente des contacts élastiques saillants (5) pour une connexion glissante avec les contacts (17) du transmetteur, lorsque le transmetteur est branché dans la prise, en fonctionnement.
